# EUROPEAN PATENT APPLICATION

(11) **EP 4 606 592 A1**
(43) Date of publication of application: **27.08.2025**
(21) Application number: 25156158.5
(22) Date of filing: 06.02.2025
(51) Int. Cl.: B42D 25/333, B42D 25/387, B42D 25/305, B41M 3/14, B41M 3/10

(54) **FLUORESCENT WATERMARK FOR PARTIALLY REFLECTING/ABSORBING INKS IN THE UV SPECTRUM**

(30) Priority: 26.02.2024 US 202418586954
(71) Applicant: Xerox Corporation, Webster, NY 14580 (US)
(72) Inventor: CHAPMAN, Edward N., Rochester, 14609 (US); IRELAND, Jonathan R., Lancaster, 17602 (US); EWANYK, Keith D., Rochester, 14624 (US)
(74) Representative: Gill Jennings & Every LLP

(57) **Abstract**

Methods and systems for configuring and rendering a fluorescent watermark can involve modifying a non-partially reflecting/absorbing ultraviolet ink from an original ultraviolet pattern by blending a minimal amount of a partially reflecting ink, and ensuring that the modification of the non-partially reflecting/absorbing ultraviolet ink maintains an appearance of two or more pattern inks as a single color/pattern under office lighting when rendered as a part of a fluorescent watermark based on the non-partially reflecting/absorbing ultraviolet ink. The fluorescent watermark can be then rendered on a substrate (e.g., paper or other material).

## Description

### TECHNICAL FIELD

Embodiments are related to image processing methods, systems and devices. Embodiments also relate to the field of specialty imaging techniques. Embodiments further relate to the creation and rendering of specialty effects, which may be incorporated into rendered documents. Embodiments further relate to digital watermarks including fluorescent watermarks.

### BACKGROUND

Specialty imaging techniques are a set of advanced and specialized methods used in printing applications, including the incorporation of digital watermarks. These techniques can be designed to enhance the security and authenticity of printed documents, such as banknotes, passports, ID cards, and other sensitive materials, by making them difficult to counterfeit or reproduce accurately. These specialty imaging techniques can also be utilized in non-security applications such as incorporating special effects into, for example, greeting cards and advertising materials.

In the area of security printing, documents can be protected from copying, forging, and counterfeiting using multiple techniques. Specialty imaging is one such method of security printing which use standard material such as papers inks and toners. Typically, security printing companies in the marketplace require special (expensive) materials. An example document is a prescription where a pharmacist would like to be able to have a high level of confidence that the document is authentic.

Specialty imaging can employ infrared (IR) and ultraviolet (UV) mark text, creating metameric pairs of inks that appear similar under office illumination and are visible with an IR camera or under UV illumination. Other UV watermarks/effects rely on adding fluorescent materials to their toner/inks. That is, in some security features, liquid ink or toner with fluorescent properties has been used. This ink can be visible, then fluoresce a different color, or in some cases may be clear/invisible and then fluoresce. In addition, modern paper used for rendering documents typically contain optical brighteners, which can cause them to glow under UV light. That is, many/most modern papers fluoresce under UV illumination due to chemical optical brighteners which are added to the make the paper appear "whiter".

While spectral watermarks such as IR and UV watermarks appear uniform under office lighting and reveal a visible watermark under UV light, UV does not work consistently with some printing systems, such as inkjet systems, due to insufficient UV light blocking ink components, which may lead to paper fluorescence where it is not desired.

Considering these challenges, a need exists for improved fluorescent watermarks that can partially reflect/absorb inks in the UV spectrum. This advancement would enable the fluorescent watermark to be rendered by various printing systems, including inkjet printers.

### BRIEF SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the embodiments to provide for improved image-processing methods, systems, and devices.

It is another aspect of the embodiments to provide for improved methods and systems for rendering a watermark for use in printing applications including security and non-security type applications.

It is a further aspect of the embodiments to provide for methods and systems for creating and rendering a fluorescent watermark.

It also an aspect of the embodiments to provide for a fluorescent watermark that can partially reflect/absorb inks in the UV spectrum and which enables the fluorescent watermark to be rendered by various printing systems.

The aforementioned aspects and other objectives and advantages can now be achieved as described herein. In an embodiment, a method for configuring a watermark, can involve modifying a non-partially reflecting/absorbing ultraviolet ink from an original ultraviolet pattern by blending a minimal amount of a partially reflecting ink, and ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink. The watermark can comprise a fluorescent watermark.

An embodiment can further involve rendering the watermark on a substrate.

In an embodiment, the substrate may comprise paper.

In an embodiment, ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink, can involve: determining the amount of reflecting/absorbing colors needed to prevent florescence.

In an embodiment, ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink, can further involve: determining the amount of individual reflecting/absorbing colors needed to keep the original ultraviolet pattern under office lighting.

In an embodiment, a method for creating and rendering a fluorescent watermark, can involve: commencing with existing pattern inks, determining, for each color in the existing pattern inks that is not partially reflective/absorbing in the UV spectrum, amounts of reflecting/absorbing colors needed to prevent fluorescence, and amounts of individual reflecting/absorbing colors needed to maintain the original color/pattern under office lighting; and blending the determined reflecting/absorbing colors in specific proportions to create the fluorescent watermark.

In an embodiment, the existing pattern inks can be based on a predetermined color scheme.

In an embodiment, the determining step can further involve analyzing the spectral properties of each color to identify reflecting/absorbing colors, which may be required for fluorescence prevention.

In an embodiment, the blending step can further involve adjusting the proportions of reflecting/absorbing colors.

In an embodiment, the proportions of reflecting/absorbing colors can be adjusted based on optical properties of the reflecting/absorbing colors.

In an embodiment, the proportions of reflecting/absorbing colors can be adjusted based on a compatibility with the original color/pattern.

In an embodiment, the blending step can involve adjusting the proportions of reflecting/absorbing colors based on their optical properties and compatibility with the original color/pattern.

In an embodiment, a system for creating and rendering a fluorescent watermark, can include at least one processor and a memory, the memory storing instructions to cause the at least one processor to perform: commence with existing pattern inks; determine, for each color in the existing pattern inks that is not partially reflective/absorbing in the UV spectrum, amounts of reflecting/absorbing colors needed to prevent fluorescence, and amounts of individual reflecting/absorbing colors needed to maintain the original color/pattern under office lighting; and blend the determined reflecting/absorbing colors in specific proportions to create the fluorescent watermark.

In an embodiment of the system, the existing pattern inks can be based on a predetermined color scheme.

In an embodiment of the system, the instructions can further cause the at least one processor to perform analyzing the spectral properties of each color to identify reflecting/absorbing colors that may be required for fluorescence prevention.

In an embodiment of the system, the instructions can further cause the at least one processor to perform adjusting the proportions of reflecting/absorbing colors based on their optical properties and compatibility with an original color/pattern.

In an embodiment of the system, the instructions can further cause the at least one processor to perform rendering the fluorescent watermark on a substrate.

### BRIEF DESCRIPTION OF THE DRAWINGS

The accompanying figures, in which like reference numerals refer to identical or functionally similar elements throughout the separate views and which are incorporated in and form a part of the specification, further illustrate the present invention and, together with the detailed description of the invention, serve to explain the principles of the present invention.
FIG. 1 illustrates an image of an example concert ticket with a UV light and under office lighting;
FIG. 2 illustrates a graph of data indicating that black toner absorbs across the spectrum while CMY are partially absorbing in the UV spectrum, in accordance with an embodiment;
FIG. 3 illustrates an image of zoomed pattern inks, in accordance with an embodiment;
FIG. 4 illustrates an image of a swatch sheet under office lighting in which most patches are correctly non-readable, in accordance with an embodiment;
FIG. 5 illustrates an image of the right side of the swatch sheet shown in FIG. 4 under UV lighting in which most patches are readable, in accordance with an embodiment;
FIG. 6 illustrates a high-level flow chart of operations depicting a method for creating a fluorescent watermark, in accordance with an embodiment;
FIG. 7 illustrates a block diagram of a printing system suitable for implementing one or more of the disclosed embodiments; and
FIG. 8 illustrates a block diagram of a digital front-end controller useful for implementing one or more of the disclosed embodiments.

It is important to note that while the drawings and figures presented herein are illustrated in black and white, they might have originally been created and displayed in color. As a result, those skilled in the art will understand that even though the images and figures may not display color, they may actually depict features in color.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein do not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context. Furthermore, the term "at least one" as utilized herein can refer to "one or more". For example, "at least one widget" may refer to "one or more widgets."

The term "data" refers herein to physical signals that indicate or include information. An "image," as a pattern of physical light or a collection of data representing the physical light, may include characters, words, and text as well as other features such as graphics.

The term "metameric" as utilized herein can relate to a metameric pair of pattern ink. In a metameric pair of pattern ink (also referred to simply as a "metameric pair") the printing and paper are not visually distinguishable when viewed from one angle but are from another angle (relative to a light source) which can create a watermark without more expensive spot inks, toners, and/or printers.

The term L*a*b (also referred to as Lab or LAB) as utilized herein relates to the CIELAB color space (L*a*b), which is a color space defined by the International Commission on Illumination (CIE). L*a*b It expresses color as three values: *L** for perceptual lightness and *a** and *b**for the four unique colors of human vision: red, green, blue and yellow. CIELAB was intended as a perceptually uniform space, where a given numerical change corresponds to a similar perceived change in color. While the LAB space is not truly perceptually uniform, it nevertheless is useful in industry for detecting small differences in color.

The term CMYK as utilized herein relates to the CMYI color model, wherein CYMK refers to the four ink plates used: cyan, magenta, yellow, and key (black). The CMYK model works by partially or entirely masking colors on a lighter, usually white, background. The ink reduces the light that would otherwise be reflected. Such a model is considered *subtractive* because inks "subtract" the colors red, green and blue from white light. White light minus red leaves cyan, white light minus green leaves magenta, and white light minus blue leaves yellow. An example of an additive color model is the RGB color model in which the red, green, and blue primary colors of light are added together to reproduce a broad array of colors. "RGB" relates to the three primary colors, red, green and blue. RGB (i.e., the RGB color model) can be used for sensing, representation, and display of images in electronic systems, such as televisions and computers.

The term "watermark" as utilized herein can relate to a piece of a transparent text, image, logo or other markings that can be applied to media (e.g., a document, paper, a photo, an image, etc.), which can make it more difficult to copy or counterfeit the media (to which the watermark is applied through security printing) or use it without permission. A "watermark" can be a special-purpose text or picture that can be printed across one or more pages. For example, one can add a word like Copy, Draft, or Confidential as a watermark instead of stamping it on a document before distribution.

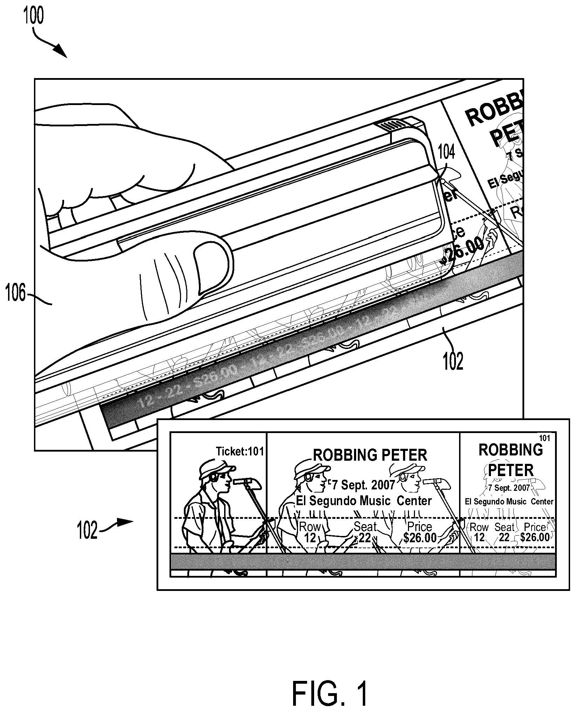

FIG. 1 illustrates an image 100 of an example concert ticket 102 with a UV light 104 and under office lighting. In the image 100 shown in FIG. 1, a user 106 (the user's hand is shown) can hold and manipulate the UV light 104 to reveal a watermark on the printed concert ticket 102. The watermark rendered on the concern ticket 102 is mostly invisible under office lighting but mostly visible with UV illumination provided by the UV light 104, as indicated in FIG. 1.

The concert ticket 102 can be held and manipulated by the user 106, whose hand is visible in the image 100, as the user directs the UV light 104 onto the surface of the concert ticket 102. At the bottom of the image 100, an inset displays the full concert ticket 102 for reference.

Under typical office lighting conditions, the watermark applied to the concert ticket 102 remains largely imperceptible to the naked eye. However, when subjected to UV illumination provided by the UV light 104, the watermark becomes predominantly visible. This contrast in visibility underscores the effectiveness of a fluorescent watermark in enhancing the security features of the concert ticket 102.

By incorporating a fluorescent watermark, the concert ticket 102 gains an added layer of protection against counterfeiting and unauthorized reproduction. The ability to reveal the watermark only under specific UV light conditions adds an element of authentication that is difficult to replicate, thus bolstering the ticket's integrity and ensuring its authenticity.

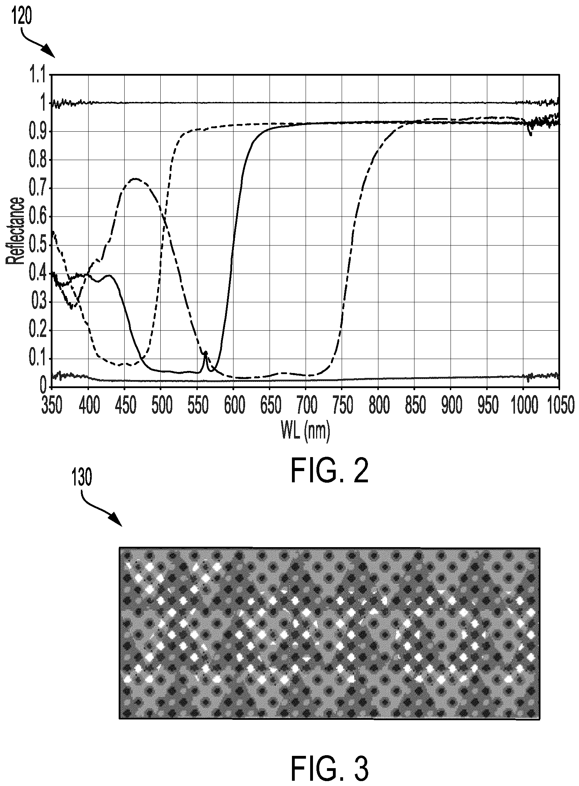

FIG. 2 illustrates a graph 120 of data indicating that black toner absorbs across the spectrum while CMY are partially absorbing in the UV spectrum (e.g., typically in the 365-395nm wavelength), in accordance with an embodiment. The y-axis of graph 120 plots reflectance data while the x-axis plots a wavelength (WL) in nanometers (nm). Notice that in the graph 120, the reflectance is about .3-.4 in that wavelength for CMY.

The graph 120 thus visually represents data pertaining to the absorption characteristics of different toners across the electromagnetic spectrum. The y-axis of the graph denotes reflectance data, which essentially measures the amount of light reflected by a surface, while the x-axis represents the wavelength (WL) of light in nanometers (nm). Graph 120 illustrates a distinct pattern where black toner demonstrates consistent absorption across the spectrum, indicated by a relatively low reflectance level throughout. Conversely, the data for cyan, magenta, and yellow (CMY) toners exhibit a notable departure in the ultraviolet (UV) spectrum, typically ranging from 365 to 395 nanometers. Here, the reflectance values for CMY toners rise to approximately 0.3 to 0.4, suggesting a partial absorption of UV light within this wavelength range.

This differential behavior in absorption properties underscores an important distinction between black toner and CMY toners, particularly in their response to UV light. While black toner uniformly absorbs light across the spectrum, CMY toners exhibit a unique behavior of partially absorbing UV light within the specified wavelength range. This partial absorption characteristic holds significance in the context of rendering fluorescent watermarks, as it influences the selection and modification of toners to achieve desired fluorescent effects.

Understanding these absorption patterns is important for optimizing the formulation of fluorescent inks and toners, as it enables the development of materials that interact selectively with UV light to produce visible fluorescence. By leveraging this knowledge, manufacturers can tailor their printing processes to enhance the security features of printed documents, such as banknotes, passports, and tickets, thereby improving their resistance to counterfeiting and unauthorized replication.

Note that the terms *fluorescence* and *fluorescent* as utilized herein can relate to paper fluorescence or pattern ink fluorescence. Paper fluorescence relates to the phenomenon where certain papers emit visible light when exposed to ultraviolet (UV) light. In paper fluorescence, the fibers in paper can react differently to UV light due to varying densities. Pattern ink fluorescence involves ink that emits light when exposed to UV radiation. While paper fluorescence can relate to the entire sheet, pattern ink fluorescence can highlight inked patterns or features. Paper fluorescence thus can affect the entire paper, whereas pattern ink fluorescence can target specific inked elements.

The graph 120 in FIG. 2 is compatible with current CMYK fluorescent watermarks because these watermarks can prevent paper from fluorescing too much. However, if there is a shift in cyan, for example, on graph 120, this might cause enough fluorescence in the paper to compromise the watermark. In both cases, the colors may only be partially reflecting or absorbing light. To clarify, only the colors that do not meet a certain threshold of reflectance or absorption may require modification.

The following steps or operation can therefore be implemented as part of a method for configuring and rendering a fluorescent watermark:
1) Start with existing patten inks based on fig 2;
2) For each color that is not partially reflective/absorbing in the UV spectrum:
3) Determine amounts of reflecting/absorbing colors needed to prevent florescence;
4) Determine amounts of individual reflecting/absorbing colors needed to keep original color/pattern under office lighting;
5) Blend in x*(reflecting/absorbing color1) + y*(reflecting/absorbing color2)...

The original inks used in step 1 can be designed using a color tool kit (e.g., such as the Xerox CTK) so pattern 1 and pattern 2 will appear as the same color/pattern at printed sizes under office lighting but only 1 pattern would allow the UV light to cause the paper to have a florescent property. A specific example of when the original inks fail is on, for example, the Xerox^{®} Baltoro^{™} HF Inkjet Press where inks containing cyan that should not allow the paper to have a fluorescent property and there the watermark will not work.

For cyan, for example small amounts may be blended of yellow and magenta to keep that pattern from having a fluorescent property and maintaining the overall color of each pattern like the original. CTK can be used to optimize the pattern color matching. How strong a UV signal is considered passing is a judgement so swatch sheets varying the colors may be used.

The approach described above for configuring and rendering a fluorescent watermark, involves a systematic approach to modify existing pattern inks to achieve desired fluorescent effects while preserving the original color and pattern integrity under different lighting conditions. The process commences by utilizing existing pattern inks, as depicted in the example shown in FIG. 2, which exhibit varying degrees of reflectance and absorption across the electromagnetic spectrum. For each color that misses the reflection/absorption threshold in the UV spectrum, an assessment can be made to determine the amount of reflecting or absorbing colors that can be required to prevent fluorescence. Next, the amounts of individual reflecting or absorbing colors needed to maintain the original color and pattern under standard office lighting conditions can be determined. These reflecting or absorbing colors can be then blended in specific proportions, denoted by, for example, *x*(reflecting*/*absorbing color1) + y*(reflecting*/*absorbing color2) + z*color 3,* to achieve the desired fluorescent watermark effect while retaining the visual consistency of the original pattern.

In some embodiments, the original inks utilized in this process can be crafted using a Color ToolKit (CTK), such as the Xerox CTK (or another appropriate CTK), as discussed above, ensuring that pattern 1 and pattern 2 can appear almost identical (or similar) in color and pattern at printed sizes under office lighting. However, only one pattern may allow UV light to induce fluorescence, enhancing the security features of the document. For instance, in the case of cyan, small amounts of yellow and magenta may be blended to prevent the pattern from fluorescing while maintaining the overall color fidelity. The CTK can facilitate the optimization of pattern color matching, ensuring the effectiveness of the fluorescent watermark.

The determination of how strong a UV signal is considered acceptable is subjective and may involve the use of swatch sheets with varying color compositions to make informed judgments during the blending process. By following these systematic steps and leveraging advanced color management tools, manufacturers can effectively configure and render fluorescent watermarks that enhance document security while maintaining visual consistency and integrity.

As discussed previously in the background section of this disclosure, many/most modern papers fluoresce under UV illumination due to the chemical optical brighteners that have been added to make the papers appear "whiter". We can thus take advantage of this for the disclosed UV effects. Thus, systems and methods are disclosed where there are "pattern ink pairs" wherein each "pattern ink" is a digital arrangement of colored pixels, which can result in differing amounts of standard C,M,Y, K inks/toners in a geometric pixel pattern, to be printed. For one "pattern ink" in the pair, the objective is **to BLOCK the fluorescence of the paper** (due to optical brighteners in the paper) under UV illumination; and for the other "pattern ink" in the pair, the objective is to **ALLOW the paper fluorescence** to show under UV illumination.

These steps or operations can be implemented such that under office lighting, the secret message does not show because the two pattern Inks are metameric pairs under that lighting (i.e., they appear to have the same color/density because the paper does not fluoresce under office lighting), but under UV illumination, the secret message shows or is visible because the two pattern inks are NOT metameric pairs under UV light (i.e., they appear to possess a different colors/density because the paper is fluorescing under UV light, and this paper fluorescence is selectively BLOCKED and ALLOWED by the "pattern inks" to create the secret message.

A problem the embodiments solve is the effect of native CMYK inks/toners of a system only partially blocking UV light, which weakens the UV blocking function of pattern ink designed for systems with better blocking CMYK ink/toners. The embodiments can **help the user** more quickly and easily combine CMYK inks/toners at specific densities IN A PATTERN INK pixel design, to deliver better blocking, thereby rendering the effect stronger.

It should be appreciated that the term "pattern ink" and variations thereof as utilized herein should not be confused with regular CMYK ink/toners. A "pattern ink" is not an ink. Instead, a "pattern ink" is an arrangement of pixels, with each pixel having a CMYK recipe (e.g., 0-100 or 0-255, depending on how it is counted) that in turn can drive a printing system to deliver that much (could be none) CMYK liquid ink or toner onto that pixel during printing. Furthermore, it is always the paper that is fluorescing in the disclosed improved specialty effects.

FIG. 3 illustrates an image 130 of zoomed pattern inks, in accordance with an embodiment. The image 130 depicts a close-up view of pattern inks, providing a detailed examination of their composition and arrangement. This zoomed-in depiction allows for a thorough analysis of the intricate patterns and colors employed in the printing process, providing insights into the complexity and precision that can be required to create effective security features.

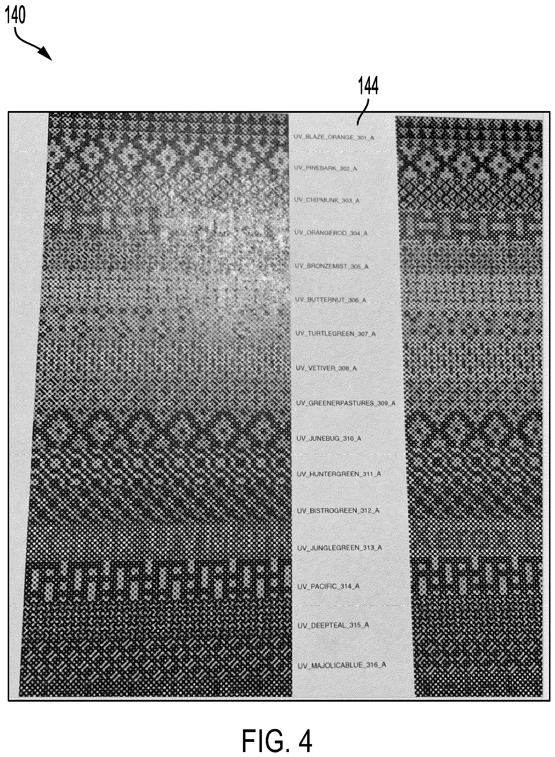

FIG. 4 illustrates an image 140 of a swatch sheet under office lighting in which most patches are correctly non-readable, in accordance with an embodiment. In FIG. 4, most patches on the swatch sheet appear indistinguishable or non-readable to the naked eye. This visual uniformity underscores the subtlety of security measures incorporated into the printing process, ensuring that under normal lighting conditions, the presence of any security features remains discreet and inconspicuous. A central column 141 in FIG. 4 on the swatch sheet indicates various UV color types as one scans downward from top to bottom on the swatch sheet.

For example, the first color type is labeled as UV_BLAZE_ORANGE_301_A, and the next color type is labeled as UV_PINEBARK_302_A, and so on. Such labels can provide a unique identifier for each color variant present on the swatch sheet. For example, the designation of UV_BLAZE_ORANGE_301_A can relate to a specific shade or hue of orange that exhibits fluorescence under UV light. The term "blaze orange" typically denotes a bright and highly visible shade of orange used in safety apparel or signage. The "_301_A" suffix can indicate a specific variation or iteration of this color within a color classification system. Similarly, "UV_PINEBARK_302_A" can denote a particular shade or hue resembling the color of pine bark that fluoresces under UV light. Pine bark typically ranges in color from dark brown to reddish-brown, and this designation may represent a specific variant optimized for UV watermarking applications.

These example UV color types can be selected and calibrated to achieve optimal performance in security printing applications. By incorporating fluorescent properties into specific color variants, such as blaze orange and pine bark, these color types enable the creation of discreet yet effective security features. When applied to documents, these UV colors can remain inconspicuous under standard office lighting but become readily visible when exposed to UV illumination, thereby enhancing document security and authenticity. The use of distinct labels for each color type can facilitate precise color matching and reproduction during the printing process, ensuring consistency and accuracy across various printing systems and applications.

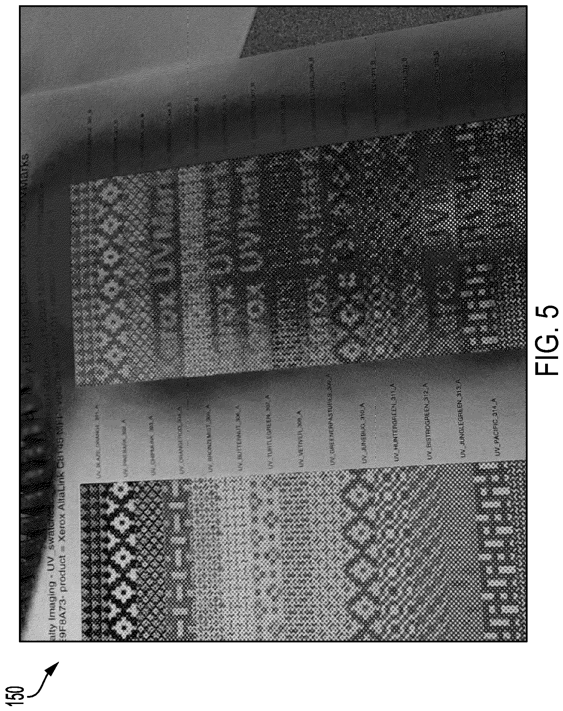

FIG. 5 illustrates an image 150 of the right side of the swatch sheet shown in FIG. 4 under UV lighting in which most patches are readable, in accordance with an embodiment. In FIG. 5, we can observe the right side of the same swatch sheet depicted in Figure 4, but under UV lighting. Here, a striking contrast emerges as most patches on the swatch sheet become distinctly readable under the UV illumination. This transformation highlights the effectiveness of the fluorescent watermarking technique employed in the printing process, as it selectively reveals hidden patterns and features only under specific lighting conditions, thereby enhancing the document's security and authenticity.

Collectively, these images illustrate the intricate interplay between standard and UV lighting conditions, showcasing how sophisticated printing techniques can create visually imperceptible security features that become readily apparent when subjected to specialized illumination. This strategic integration of covert security measures ensures that documents remain protected against counterfeiting and unauthorized duplication, bolstering confidence in their authenticity and integrity.

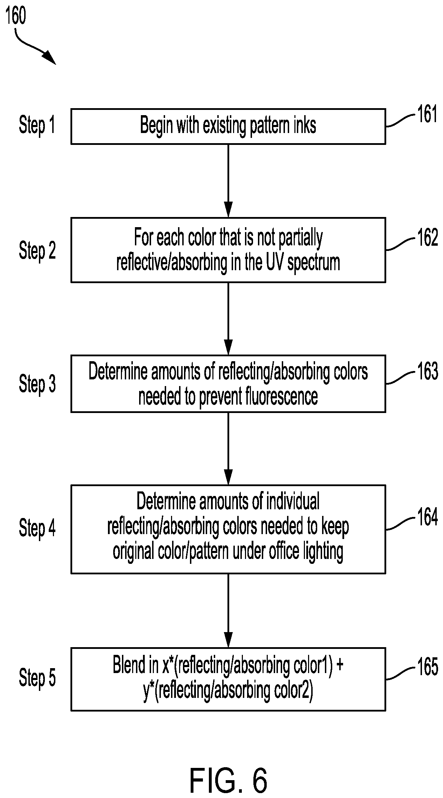

FIG. 6 illustrates a high-level flow chart of operations depicting a method 160 for creating a fluorescent watermark, in accordance with an embodiment. As shown at block 161, a step or operation can be implemented by utilizing existing pattern inks, an example of which is depicted in FIG. 2, which can exhibit varying degrees of reflectance and absorption across the electromagnetic spectrum. This initial step can involve leveraging existing pattern inks, as exemplified by FIG. 2, which possess diverse reflectance and absorption characteristics across the electromagnetic spectrum. These inks can serve as the foundational elements upon which the fluorescent watermark can be constructed.

For colors that lack partial reflection or absorption in the UV spectrum, a series of operations are undertaken to optimize their properties for fluorescent watermark creation. As depicted next at block 162, a step or operation can be implemented wherein for each color that is not partially reflective/absorbing in the UV spectrum, the subsequent operations shown at blocks 163, 164, and 165 may be implemented. That is, as indicated at block 163, a step or operation can be implemented to determine amounts of reflecting/absorbing colors needed to prevent fluorescence. Then, as illustrated at block 164, a step or operation can be implemented to determine amounts of individual reflecting/absorbing colors needed to keep original color/pattern under office lighting. Finally, as shown at block 165, a step or operation can be implemented to blend in x*(reflecting/absorbing color1) + y*(reflecting/absorbing color2). The result of this is the creation of a fluorescent watermark, which can be rendered by a broad range of printing systems.

The step or operation shown at block 163 can involve determining the quantities of reflecting or absorbing colors necessary to prevent fluorescence, ensuring that the resultant watermark remains covert under standard lighting conditions. The step or operation indicated at block 164 can entail determining the precise amounts of individual reflecting or absorbing colors that may be required to preserve the original color and pattern integrity under typical office lighting. The step or operation illustrated at block 165 can involve a blending process, wherein the identified reflecting or absorbing colors can be combined in specific proportions (e.g., denoted by x*(reflecting/absorbing color1) + y*(reflecting/absorbing color2)). This meticulous blending technique can therefore ensure the creation of a fluorescent watermark that seamlessly integrates with the original design while enhancing document security.

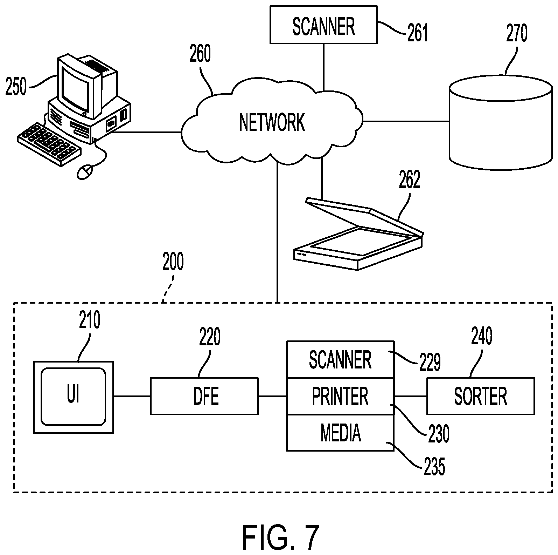

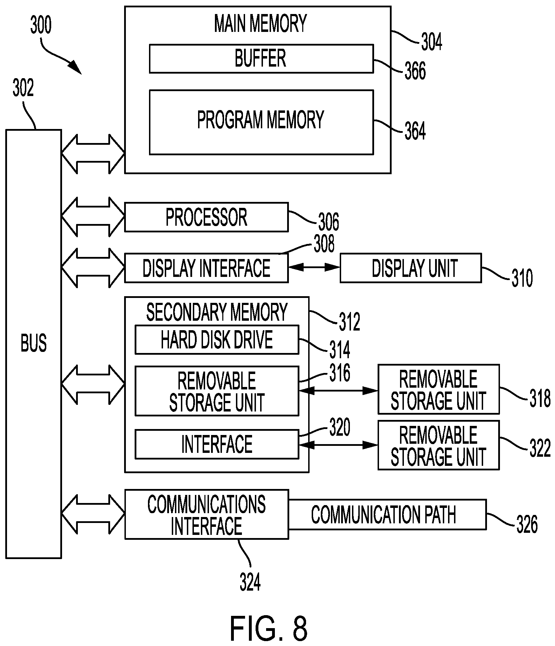

FIG. 7 illustrates a block diagram of a printing system 200 suitable for implementing one or more of the disclosed embodiments. FIG. 8 illustrates a block diagram of a digital front-end controller 300 useful for implementing one or more of the disclosed embodiments. For example, the printing system 200 and/or the digital front-end controller 300 can be used to render a document with a yellow, black gloss effect.

With reference to FIG. 7, a printing system (or image rendering system) 200 suitable for implementing various aspects of the exemplary embodiments described herein is illustrated. The printing system 200 can implement rendering operations such as scanning a document via a scanner and printing a document via a printer, wherein the document can exhibit the disclosed fluorescent watermark.

Note that the term 'scanner' as utilized herein may refer to an image scanner, which is a device or system that can optically scan images, printed text, handwriting or an object and converts it to a digital image. An example of a scanner is a flatbed scanner where the document to be imaged (e.g., a form) can be placed on a glass window for scanning. The scanner may in some cases be incorporated into a multifunction device (MFD), which also may possess printing and photocopying features. The scanner may also be incorporated into, for example, a printing system such as the printing system 200 shown in FIG. 7. For example, the scanner 229 is shown in FIG. 7 as a part of the printing system 200. Alternatively, or in addition to the scanner 229 included as a part of the printing system 100, a scanner may be implemented as a separate scanner 262 also depicted in FIG. 7, which can communicate with the network 260.

The word "printer" and the term "printing system" as used herein can encompass any apparatus and/or system; such as a digital copier, xerographic and reprographic printing systems, bookmaking machine, facsimile machine, multifunction machine, ink-jet machine, continuous feed, sheet-fed printing device, etc.; which may contain a print controller and a print engine and which may perform a print outputting function for any purpose.

The printing system 200 can include a user interface 210, a digital front-end (DFE) controller 220, and at least one print engine 230. The print engine 230 has access to print media 235 of various sizes and cost for a print job. The printing system 200 can comprise a color printer having multiple color marking materials.

A "print job" or "document" is normally a set of related sheets, usually one or more collated copy sets copied from a set of original print job sheets or electronic document page images, from a particular user, or otherwise related. For submission of a regular print job (or customer job), digital data can be sent to the printing system 200.

A sorter 240 can operate after a job is printed by the print engine 230 to manage arrangement of the hard copy output, including cutting functions. A user can access and operate the printing system 200 using the user interface 210 or via a data-processing system such as a computer 250. The computer 250 can communicate bidirectionally with the printing system 200 via a communications network 260. As shown in FIG. 87the computer 250 includes a screen (display screen) upon which a digital image may be displayed and viewed by a user.

A user profile, a work product for printing, a media library, and various print job parameters can be stored in a database or memory 270 accessible by the computer 250 or the printing system 200 via the network 260, or such data can be directly accessed via the printing system 200. One or more color sensors (not shown) may be embedded in the printer paper path, as known in the art.

With respect to FIG. 8, an exemplary DFE (Digital Front End) controller 300 is shown in greater detail. The DFE controller 300 can include one or more processors, such as processor 306, which is capable of executing machine executable program instructions. The processor 306 can function as a DFE processor.

In the embodiment shown in FIG. 8, the processor 306 can be in communication with a bus 302 (e.g., a backplane interface bus, cross-over bar, or data network). The digital front end 300 can also include a main memory 304 that is used to store machine readable instructions. The main memory 304 is also capable of storing data. The main memory 304 may alternatively include random access memory (RAM) to support reprogramming and flexible data storage. A buffer 366 can be used to temporarily store data for access by the processor 306.

Program memory 364 can include, for example, executable programs that can implement the embodiments described herein. The program memory 364 can store at least a subset of the data contained in the buffer. The digital front end 300 can include a display interface 308 that can forward data from a communication bus 302 (or from a frame buffer not shown) to a display 310. The digital front end 300 can also include a secondary memory 312 that can include, for example, a hard disk drive 314 and/or a removable storage drive 316, which can read and write to removable storage 318, such as a floppy disk, magnetic tape, optical disk, etc., that stores computer software and/or data.

The secondary memory 312 alternatively may include other similar mechanisms for allowing computer programs or other instructions to be loaded into the computer system. Such mechanisms can include, for example, a removable storage unit 322 adapted to exchange data through interface 320. Examples of such mechanisms include a program cartridge and cartridge interface (such as that found in video game devices), a removable memory chip (such as an EPROM, or PROM) and associated socket, and other removable units and interfaces, which allow software and data to be transferred.

The digital front end (DFE) controller 300 shown in FIG. 8 can include a communications interface 324, which can act as an input and an output to allow software and data to be transferred between the digital front end controller 300 and external devices. Examples of a communications interface include a modem, a network interface (such as an Ethernet card), a communications port, a PCMCIA slot and card, etc.

Computer programs (also called computer control logic) and including one or more modules may be stored in the main memory 304 and/or the secondary memory 312. Computer programs or modules may also be received via a communications interface 324. Such computer programs or modules, when executed, enable the computer system to perform the features and capabilities provided herein. Software and data transferred via the communications interface can be in the form of signals which may be, for example, electronic, electromagnetic, optical, or other signals capable of being received by a communications interface.

These signals can be provided to a communications interface via a communications path (i.e., channel), which carries signals and may be implemented using wire, cable, and fiber optic, phone line, cellular link, RF, or other communications channels. Part of the data stored in secondary memory 312 for access during a DFE operation may be a set of translation tables that can convert an incoming color signal into a physical machine signal.

This color signal can be expressed either as a colorimetric value; usually three components as L*a*b*, RGB, XYZ, etc.; into physical exposure signals for the four toners cyan, magenta, yellow and black. These tables can be created outside of the DFE and downloaded but may be optionally created inside the DFE in a so-called characterization step. Part of the data stored in secondary memory 312 may also be the previously discussed transformation table.

The fluorescent watermark created and rendered by the methods described earlier can be implemented in the printing system (or image rendering system) 200 depicted in FIG. 7 and managed by the digital front-end (DFE) controller 300 illustrated in FIG. 8. The printing system 200 and the DFE controller 300 can facilitate the rendering of documents with the fluorescent watermark. The printing system 200 includes components such as a user interface 210, a DFE controller 220, and at least one print engine 230. It also features a sorter 240 for organizing printed output and managing cutting functions.

The print engine 230 can be responsible for applying the fluorescent watermark onto the print media 235, which can include various types and sizes of paper for accommodating different print jobs. The user interface 210 can allow users to interact with the printing system 200, providing options for initiating print jobs, adjusting settings, and monitoring printing processes. The printing system 200 can support the creation and printing of documents with specialized effects, including the yellow, black gloss effect mentioned in the description.

The DFE controller 300 depicted in FIG. 8 can serve as the processing hub for managing print jobs and ensuring the accurate rendering of documents. The processor 306 is capable of executing machine-readable instructions stored in main memory 304 and program memory 364. The DFE controller 300 can communicate bidirectionally with external devices, such as computers 250, via a communications interface 324 and network 260, and can facilitate the transformation of digital data into printable output, orchestrating the conversion of color signals into physical machine signals for cyan, magenta, yellow, and black toners.

The DFE controller 300 shown in FIG. 8 can also utilize translation tables stored in secondary memory 312 to convert incoming color signals into appropriate toner exposure signals, ensuring accurate color reproduction and effective implementation of the fluorescent watermark. By integrating the fluorescent watermark creation process into the printing system's workflow and leveraging the capabilities of the DFE controller, documents can be rendered with the desired security features. The utilized printing system can effectively apply the fluorescent watermark onto print media, while the DFE controller orchestrates the conversion of digital data into printable output, ensuring fidelity to the original design and enhancing document security. This seamless integration can enable the printing system to produce documents with advanced security features, including the disclosed fluorescent watermark, across a variety of printing applications and media types.

Several aspects of data-processing systems will now be presented with reference to various systems and methods. These systems and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. A mobile "app" is an example of such software.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer.

The disclosed example embodiments are described at least in part herein with reference to flowchart illustrations and/or block diagrams and/or schematic diagrams of methods, systems, and computer program products and data structures according to embodiments of the invention. It will be understood that each block of the illustrations, and combinations of blocks, can be implemented by computer program instructions. These computer program instructions may be provided to a processor of, for example, a general-purpose computer, special-purpose computer, or other programmable data processing apparatus to produce a machine, such that the instructions, which execute via the processor of the computer or other programmable data processing apparatus, create means for implementing the functions/acts specified in the block or blocks.

To be clear, the disclosed embodiments can be implemented in the context of, for example a special-purpose computer or a general-purpose computer, or other programmable data processing apparatus or system. For example, in some example embodiments, a data processing apparatus or system can be implemented as a combination of a special-purpose computer and a general-purpose computer. The computer program product may include a computer readable storage medium (or media) having computer readable program instructions thereon for causing a processor to carry out aspects of the embodiments.

The aforementioned computer program instructions may also be stored in a computer-readable memory that can direct a computer or other programmable data processing apparatus to function in a particular manner, such that the instructions (e.g., steps/operations) stored in the computer-readable memory produce an article of manufacture including instruction means which implement the function/act specified in the various block or blocks, flowcharts, and other architecture illustrated and described herein.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

The flow charts and block diagrams in the figures illustrate the architecture, functionality, and operation of possible implementations of systems, methods, and computer program products according to various embodiments (e.g., preferred or alternative embodiments). In this regard, each block in the flow chart or block diagrams depicted and described herein can represent a module, segment, or portion of instructions, which can comprise one or more executable instructions for implementing the specified logical function(s).

In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The functionalities described herein may be implemented entirely and nonabstractly as physical hardware, entirely as physical non-abstract software (including firmware, resident software, micro-code, etc.) or combining non-abstract software and hardware implementations that may be referred to herein as a "circuit," "module," "engine", "component," "block", "database", "agent" or "system." Furthermore, aspects of the present disclosure may take the form of a computer program product embodied in one or more non-ephemeral computer readable media having computer readable and/or executable program code embodied thereon.

The following discussion is intended to provide a brief, general description of suitable computing environments in which the system and method may be implemented. Although not required, the disclosed embodiments will be described in the general context of computer-executable instructions, such as program modules, being executed by a single computer. In most instances, a "module" (also referred to as an "engine") may constitute a software application but can also be implemented as both software and hardware (i.e., a combination of software and hardware).

Generally, program modules include, but are not limited to, routines, subroutines, software applications, programs, objects, components, data structures, etc., that perform particular tasks or implement particular data types and instructions. Moreover, those skilled in the art will appreciate that the disclosed method and system may be practiced with other computer system configurations, such as, for example, hand-held devices, multi-processor systems, data networks, microprocessor-based or programmable consumer electronics, networked PCs, minicomputers, mainframe computers, servers, and the like.

Note that the term *module* as utilized herein may refer to a collection of routines and data structures that perform a particular task or implements a particular data type. Modules may be composed of two parts: an interface, which lists the constants, data types, variable, and routines that can be accessed by other modules or routines, and an implementation, which may be typically private (accessible only to that module) and which includes source code that actually implements the routines in the module. The term module may also simply refer to an application, such as a computer program designed to assist in the performance of a specific task, such as word processing, accounting, inventory management, etc.

In some example embodiments, the term "module" can also refer to a modular hardware component or a component that is a combination of hardware and software. It should be appreciated that implementation and processing of such modules according to the approach described herein can lead to improvements in processing speed and in energy savings and efficiencies in a data-processing system such as, for example, the printing system 200 shown in FIG. 7 and/or the DFE controller 300 shown in FIG. 8. A "module" can perform the various steps, operations or instructions discussed herein, such as one or more of the steps or operations discussed herein.

The methods described herein, for example, may be implemented, in part, in a computer program product comprising a module that may be executed by, for example, DFE controller 220. The computer program product may comprise a non-transitory computer-readable recording medium on which a control program can be recorded (e.g., stored), such as a disk, hard drive, or the like. Note that the term 'recording medium' as utilized herein can relate to such a non-transitory computer-readable recording medium.

Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other non-transitory medium from which a computer can read and use. The computer program product may be integral with the DFE controller 220 (for example, an internal hard drive of RAM), or may be separate (for example, an external hard drive operatively connected with the printer), or may be separate and accessed via a digital data network such as a local area network (LAN) or the Internet (e.g., as a redundant array of inexpensive or independent disks (RAID) or other network server storage that can be indirectly accessed by the DFE controller 220, via a digital network such as the network 260 shown in FIG. 8).

It is understood that the specific order or hierarchy of steps, operations, or instructions in the processes or methods disclosed is an illustration of exemplary approaches. For example, the various steps, operations or instructions discussed herein can be performed in a different order. Similarly, the various steps and operations of the disclosed example pseudo-code discussed herein can be varied and processed in a different order. Based upon design preferences, it is understood that the specific order or hierarchy of such steps, operation or instructions in the processes or methods discussed and illustrated herein may be rearranged. The accompanying claims, for example, present elements of the various steps, operations or instructions in a sample order, and are not meant to be limited to the specific order or hierarchy presented.

The inventors have realized a non-abstract technical solution to the technical problem to improve a computer-technology by improving efficiencies in such computer technology. The disclosed embodiments offer technical improvements to a computer-technology such as a data-processing system, and further provide for a non-abstract improvement to a computer technology via a technical solution to the technical problem(s) identified in the background section of this disclosure. Such improvements can result from implementations of the embodiments. The claimed solution may be rooted in computer technology in order to overcome a problem specifically arising in the realm of computers, computer networks, and printing and scanning. The claimed solution may also involve non-abstract devices such as security devices including non-abstract features such as printed media (e.g., paper) upon which the security device (e.g., a watermark) may be rendered.

Based on the foregoing, it can be appreciated that a number of different embodiments are disclosed herein. For example, in an embodiment a method for configuring a watermark can involve modifying a non-partially reflecting/absorbing ultraviolet ink from an original ultraviolet pattern by blending a minimal amount of a partially reflecting ink, and ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink.

In an embodiment, the watermark can comprise a fluorescent watermark.

An embodiment of the method can further involve rendering the watermark on a substrate.

In an embodiment, the substrate comprises paper.

An embodiment can further involve determining an amount of reflecting/absorbing colors needed to prevent florescence.

An embodiment can also involve determining an amount of individual reflecting/absorbing colors needed to keep the original ultraviolet pattern under office lighting.

In an embodiment, a method for creating and rendering a fluorescent watermark, can further involve: commencing with existing pattern inks; determining, for each color in the existing pattern inks that is not partially reflective/absorbing in the UV spectrum, amounts of reflecting/absorbing colors needed to prevent fluorescence, and amounts of individual reflecting/absorbing colors needed to maintain the original color/pattern under office lighting; and blending the determined reflecting/absorbing colors in specific proportions to create the fluorescent watermark.

In an embodiment, the existing pattern inks can be based on a predetermined color scheme.

In an embodiment, the determining step can further involve analyzing the spectral properties of each color to identify reflecting/absorbing colors for fluorescence prevention.

In an embodiment, the blending step can involve adjusting the proportions of reflecting/absorbing colors.

In an embodiment, the proportions of reflecting/absorbing colors can be adjusted based on optical properties of the reflecting/absorbing colors.

In an embodiment, the proportions of reflecting/absorbing colors can be adjusted based on a compatibility with an original color/pattern.

In an embodiment, the blending step can involve adjusting the proportions of reflecting/absorbing colors based on their optical properties and compatibility with an original color/pattern.

In an embodiment, a system for creating and rendering a fluorescent watermark, can include at least one processor and a memory, the memory storing instructions to cause the at least one processor to perform: commencing with existing pattern inks; determining, for each color in the existing pattern inks that is not partially reflective/absorbing in the UV spectrum, reflecting/absorbing colors for preventing fluorescence and individual reflecting/absorbing colors for maintaining an original color/pattern associated with the existing pattern inks under office lighting; and blending the determined reflecting/absorbing colors in specific proportions to create the fluorescent watermark.

In an embodiment of the system, the existing pattern inks can be based on a predetermined color scheme.

In an embodiment of the system, the instructions can further cause the at least one processor to perform analyzing the spectral properties of each color to identify reflecting/absorbing colors for fluorescence prevention.

In an embodiment of the system, the instructions can further cause the at least one processor to perform adjusting the proportions of reflecting/absorbing colors based on their optical properties and compatibility with an original color/pattern.

In an embodiment of the system, the instructions can further cause the at least one processor to perform rendering the fluorescent watermark on a substrate.

In an embodiment, the substrate can comprise paper.

In an embodiment, determining, for each color in the existing pattern inks that is not partially reflective/absorbing in the UV spectrum, reflecting/absorbing colors for preventing fluorescence and individual reflecting/absorbing colors for maintaining an original color/pattern associated with the existing pattern inks under office lighting, can further involve: determining, for each color in the existing pattern inks that is not partially reflective/absorbing in the UV spectrum, an amount of the reflecting/absorbing colors needed to prevent fluorescence, and an amount of the individual reflecting/absorbing colors required for maintaining the original color/pattern under office lighting.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A method for configuring a watermark, comprising:
modifying a non-partially reflecting/absorbing ultraviolet ink from an original ultraviolet pattern by blending a minimal amount of a partially reflecting ink; and
ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink.

2. The method of claim 1 wherein the watermark comprises a fluorescent watermark.

3. The method of any of the preceding claims further comprising rendering the watermark on a substrate; optionally wherein the substrate comprises paper.

4. The method of any of the preceding claims wherein ensuring that the modification of the non-partially reflecting/absorbing ultraviolet ink maintains an appearance of at least two pattern inks as a single color/pattern under office lighting when rendered as a part of a watermark based on the non-partially reflecting/absorbing ultraviolet ink, further comprises one or each of:
determining an amount of reflecting/absorbing colors needed to prevent florescence and
determining an amount of individual reflecting/absorbing colors needed to keep the original ultraviolet pattern under office lighting.

5. A method for creating and rendering a fluorescent watermark, comprising:
commencing with existing pattern inks;
determining, for each color in the existing pattern inks that is not partially reflective/absorbing in the UV spectrum, amounts of reflecting/absorbing colors needed to prevent fluorescence, and amounts of individual reflecting/absorbing colors needed to maintain the original color/pattern under office lighting; and
blending the determined reflecting/absorbing colors in specific proportions to create the fluorescent watermark.

6. The method of claim 5 wherein the existing pattern inks are based on a predetermined color scheme.

7. The method of claim 5 or claim 6 wherein the determining step further comprises analyzing the spectral properties of each color to identify reflecting/absorbing colors for fluorescence prevention.

8. The method of any of claims 5 to 7 wherein the blending step involves adjusting the proportions of reflecting/absorbing colors.

9. The method of claim 8 wherein the proportions of reflecting/absorbing colors are adjusted based on one or each of:
optical properties of the reflecting/absorbing colors;
a compatibility with an original color/pattern.

10. The method of any of claims 5 to 9 wherein the blending step involves adjusting the proportions of reflecting/absorbing colors based on their optical properties and compatibility with an original color/pattern.

11. A system for creating and rendering a fluorescent watermark, comprising:
at least one processor and a memory, the memory storing instructions to cause the at least one processor to perform:
commencing with existing pattern inks;
determining, for each color in the existing pattern inks that is not partially reflective/absorbing in the UV spectrum, reflecting/absorbing colors for preventing fluorescence and individual reflecting/absorbing colors for maintaining an original color/pattern associated with the existing pattern inks under office lighting; and
blending the determined reflecting/absorbing colors in specific proportions to create the fluorescent watermark.

12. The system of claim 11 wherein the existing pattern inks are based on a predetermined color scheme.

13. The system of claim 11 or claim 12 wherein the instructions further cause the at least one processor to perform analyzing the spectral properties of each color to identify reflecting/absorbing colors for fluorescence prevention.

14. The system of any of claims 11 to 13 wherein the instructions further cause the at least one processor to perform one or each of:
adjusting the proportions of reflecting/absorbing colors based on their optical properties and compatibility with an original color/pattern;
rendering the fluorescent watermark on a substrate, optionally wherein the substrate comprises paper.

15. The system of any of claims 11 to 14 wherein determining, for each color in the existing pattern inks that is not partially reflective/absorbing in the UV spectrum, reflecting/absorbing colors for preventing fluorescence and individual reflecting/absorbing colors for maintaining an original color/pattern associated with the existing pattern inks under office lighting, further comprises:
determining, for each color in the existing pattern inks that is not partially reflective/absorbing in the UV spectrum, an amount of the reflecting/absorbing colors needed to prevent fluorescence, and an amount of the individual reflecting/absorbing colors required for maintaining the original color/pattern under office lighting.
